# EUROPÄISCHE PATENTANMELDUNG

(11) **EP 1 069 351 A2**
(43) Veröffentlichungstag der Anmeldung: **17.01.2001**
(21) Anmeldenummer: 00112560.8
(22) Anmeldetag: 14.06.2000
(51) Int. Cl.: F16J 15/08

(54) **Dichtung, inbesondere für Kraftfahrzeuge**

(30) Priorität: 14.07.1999 DE 19932727
(71) Anmelder: ELRING KLINGER GMBH, 72581 Dettingen (DE)
(72) Erfinder: Sautter, Helmut, 72581 Dettingen (DE); Kullen, Wilhelm, 72584 Hülben (DE)
(74) Vertreter: Hoeger, Stellrecht & Partner

(57) **Zusammenfassung**

Flachdichtung mit einer Dichtungsplatte, welche mindestens eine Blechlage aufweist, die mit einem Schraubenloch für den Durchtritt des Gewindeschafts einer Schraube und mit einer Verliersicherung für die Schraube versehen ist; damit beim Einbau der Flachdichtung das Schraubengewinde durch die Verliersicherung nicht beschädigt werden kann, weist letztere die folgenden Merkmale auf:
(a) mindestens ein einen Abschnitt des Schraubenlochrands bildender Blechlagenbereich ist derart aus der Ebene der Blechlage herausgebogen, daß - senkrecht zur Ebene der Blechlage gesehen - mindestens ein Lochrandabschnitt von einem diesem gegenüberliegenden Lochrandabschnitt einen Abstand aufweist, welcher kleiner als der Außendurchmesser des Schraubenschafts, jedoch mindestens gleich dem Kerndurchmesser des Schraubengewindes ist;
(b) der Schraubenlochrand ist so gestaltet, daß er bei im Bereich des Schraubenlochs flachgepreßter Blechlage den das Schraubenloch durchgreifenden Gewindeschaft freigibt.

## Beschreibung

Die Erfindung betrifft eine Flachdichtung, insbesondere eine Dichtung für eine Kraftfahrzeugkomponente, wie einen Ansaugkrümmer, wobei die Dichtungsplatte der Flachdichtung mindestens eine Blechlage aufweist, die mit wenigstens einem Schraubenloch für den Durchtritt des Gewindeschafts einer Schraube versehen ist, welche der Befestigung der Fahrzeugkomponente und dem Anziehen der Dichtung dient, also z. B. der Befestigung des Ansaugkrümmers und der Dichtung am Zylinderkopf eines Verbrennungsmotors.

Fahrzeughersteller verlangen in immer größerem Umfang von ihren Zulieferern, daß letztere Bauteile samt zugehörigen Komponenten in vormontiertem Zustand anliefern. Aber selbst wenn ein Zulieferer ein Bauteil ohne zugehörige Komponenten liefert, werden die letzteren im Werk des Fahrzeugherstellers oft schon am Bauteil angebracht, ehe dieses zur Montage an das Montageband gebracht wird. Deshalb wird im Zuge der vorstehend beschriebenen Bestrebungen gefordert, daß die Dichtung samt Montageschrauben an das Montageband angeliefert wird, wobei die Schrauben verliersicher an der Dichtung gehalten werden sollen. Angestrebt wird sogar, daß ganze vormontierte Baugruppen an das Montageband angeliefert werden, also z. B. eine Baugruppe bestehend aus einem Ansaugkrümmer, der zugehörigen Flachdichtung und den zugehörigen Montageschrauben, wobei die Dichtung über eine oder mehrere Schrauben auf dem Ansaugkrümmer unverlierbar vormontiert ist. Eine solche vormontierte Baugruppe kann nun mit einer Hand am Motor angesetzt werden, während sich mit der anderen Hand die Montageschrauben anziehen lassen.

Das DE-U-298 09 130.5 der Firma Elring Klinger GmbH zeigt eine Flachdichtung mit einer einzigen Blechlage und mehreren Schraubenlöchern, von denen einige mit Mitteln versehen sind, um Schrauben verliersicher an der Dichtung zu halten. Bei diesen Sicherungsmitteln handelt es sich um mehrere, vom Rand des Schraubenlochs in Richtung zum Zentrum des dem Grunde nach kreisrunden Lochs abstehende Haltezungen, welche über den Lochumfang gleichmäßig verteilt und im Abstand voneinander angeordnet sind; während eine der Haltezungen in der Ebene der Blechlage liegt, sind die anderen durch Abbiegen des Blechs an der Zungenwurzel sowie im Abstand vom vorderen Zungenende derart aus der Ebene der Blechlage herausgebogen, daß die dem Lochzentrum zugewandten Randbereiche der Haltezungen der Steigung des Schraubengewindes entsprechend in Achsrichtung des Schraubenlochs gegeneinander versetzt angeordnet sind, wobei - in der Draufsicht auf die Blechlage - die dem Lochzentrum zugewandten Randbereiche der Haltezungen ein kreisförmiges Kernloch definieren, dessen Durchmesser dem Kerndurchmesser des Schraubengewindes entspricht, so daß diese Randbereiche in das Schraubengewinde eingreifen können. Besteht die Blechlage aus einem federnd nachgiebigen Material, wie Federstahlblech, ist es grundsätzlich möglich, eine Schraube in das betreffende Schraubenloch einzustecken, ohne sie drehen zu müssen; da bei dieser bekannten Konstruktion die in radialer Richtung gemessene Länge der Haltezungen jedoch verhältnismäßig gering ist und weniger als einem Viertel des Kerndurchmessers des Schraubengewindes entspricht, kann es unter Umständen empfehlenswert sein, die Schraube beim Einbringen in das Schraubenloch zu drehen, um eine Beschädigung des Schraubengewindes durch die Haltezungen mit Sicherheit auszuschließen. Allerdings besteht selbst dann noch das Risiko einer Beschädigung des Schraubengewindes, und zwar beim Anziehen der Montageschrauben, d. h. beim Einspannen der Dichtung zwischen den durch die Dichtung gegeneinander abzudichtenden Bauteilen, da ein Teil der Haltezungen unterschiedlich weit aus der Ebene der Blechlage herausgebogen ist, die dem Zentrum des Schraubenlochs zugewandten Randbereiche der Haltezungen jedoch ein kreisförmiges Kernloch definieren, dessen Durchmesser dem Kerndurchmesser des Schraubengewindes entspricht, so daß die radial inneren Enden der Haltezungen beim Einspannen der Dichtung die Tendenz haben, ein Loch mit einem Durchmesser zu bilden, welcher kleiner als der Kerndurchmesser des Schraubengewindes ist, was zu Verwerfungen der Haltezungen und/oder zu Beschädigungen des Schraubengewindes durch die Haltezungen führen kann.

Der Erfindung lag die Aufgabe zugrunde, diese bekannte Dichtung so zu verbessern, daß die Schraubensicherungsmittel keinesfalls zu einer Beschädigung des Schraubengewindes führen können und die grundsätzliche Möglichkeit eröffnen, die das Schraubenloch durchquerende Schraube zumindest ungefähr senkrecht zur Ebene der Dichtungsplatte zu halten.

Ausgehend von einer Flachdichtung mit einer Dichtungsplatte, welche mindestens eine Blechlage aufweist, die mit wenigstens einem Schraubenloch für den Durchtritt des Gewindeschafts einer Schraube sowie im Randbereich des Schraubenlochs mit von der Blechlage gebildeten, aus der Ebene der Blechlage herausgebogenen Schraubenhaltemitteln versehen ist, läßt sich diese Aufgabe erfindungsgemäß durch die Kombination der folgenden Merkmale lösen:
(a) mindestens ein einen Abschnitt des Schraubenlochrands bildender Blechlagenbereich ist derart aus der Ebene der Blechlage herausgebogen, daß - senkrecht zur Ebene der Blechlage gesehen - mindestens ein Lochrandabschnitt von einem diesem gegenüberliegenden Lochrandabschnitt einen Abstand aufweist, welcher kleiner als der Außendurchmesser des Schraubenschafts, jedoch mindestens gleich dem Kerndurchmesser des Schraubengewindes ist;
(b) der Schraubenlochrand ist so gestaltet, daß er bei im Bereich des Schraubenlochs flachgepreßter Blechlage den das Schraubenloch durchgreifenden Gewindeschaft freigibt.

Grundgedanke der vorliegenden Erfindung ist es also, die Gestalt und den Verlauf des Schraubenlochrands so zu wählen, daß einerseits, solange der besagte Blechlagenbereich aus der Ebene der Blechlage herausgebogen ist, das Schraubenloch - in einer Draufsicht auf die Blechlage - mindestens eine Diagonale besitzt, welche kleiner als der Außendurchmesser des Schraubengewindes ist, so daß einander gegenüberliegende Lochrandabschnitte in das Schraubengewinde eingreifen, und daß andererseits bei flachgepreßter Blechlage das Schraubenloch in der Draufsicht auf die Blechlage in jeder Lochdiagonale so groß ist, daß der Schraubenlochrand überall den Schraubenschaft freigibt.

Insbesondere dann, wenn nur ein einziger, einen Lochrandabschnitt bildender Blechlagenbereich aus der Ebene der Blechlage herausgebogen ist, läßt sich die Schraube unter Ausschluß eines Beschädigungsrisikos in das Schraubenloch einstecken, ohne daß sie dabei gedreht werden muß; andererseits ist dann ohne zusätzliche Maßnahmen nicht gewährleistet, daß die Schraube mindestens ungefähr senkrecht zur Ebene der Blechlage gehalten wird. Letzteres läßt sich mit Ausführungsformen der erfindungsgemäßen Dichtung erreichen, bei denen aus der Ebene der Blechlage mindestens zwei Blechlagenbereiche herausgebogen sind, deren jeder einen Lochrandabschnitt bildet.

Da es, wie vorstehend dargelegt wurde, für die Verwirklichung des Grundprinzips der Erfindung nur darauf ankommt, daß das Schraubenloch durch Verbiegen der Blechlage z. B. in Richtung einer Diagonalen verkürzt wird - in der Draufsicht auf die Blechlage gesehen -, zeichnen sich besonders einfache Ausführungsformen der erfindungsgemäßen Dichtung, bei denen auch nicht die Gefahr einer Verletzung beim Handhaben der Dichtung besteht, dadurch aus, daß sich das Schraubenloch in einem Dichtungsplattenvorsprung befindet, welcher über ihm benachbarte Außenkonturbereiche der Dichtungsplatte vorsteht, und daß die Blechlage mit einer in der Draufsicht auf letztere ungefähr geradlinigen Prägung versehen ist, welche sich zu beiden Seiten des Schraubenlochs ungefähr quer zu derjenigen Richtung erstreckt, in der der Dichtungsplattenvorsprung über die benachbarten Außenkonturbereiche der Dichtungsplatte vorsteht. Durch eine solche Prägung wird das Schraubenloch in Richtung der senkrecht zur Prägung verlaufenden Diagonalen verkürzt, und durch Flachpressen der Blechlage wird diese Verkürzung wieder aufgehoben.

Wenn das Schraubenloch in einem Dichtungsplattenvorsprung liegt, der über ihm benachbarte Außenkonturbereiche der Dichtungsplatte vorsteht, kann es sich empfehlen, den Vorsprung durch einen sich vom äußeren Rand der Blechlage bis zum Schraubenloch erstreckenden Schlitz in zwei Blechzungen aufzuteilen, die jeweils einen aus der Ebene der Blechlage herausgebogenen Blechlagenbereich bilden. Durch solche herausgebogenen Blechzungen läßt sich die Schraube ungefähr senkrecht zur Blechlagenebene halten, in Abhängigkeit von der Blechstärke und den elastischen Eigenschaften der Blechlage können sie es aber auch zulassen, die Schraube einfach in das Schraubenloch einzustecken (ohne sie zu drehen), ohne daß dabei das Schraubengewinde beschädigt würde.

Weitere Merkmale der erfindungsgemäßen Flachdichtung ergeben sich aus den beigefügten Ansprüchen und/oder aus der beigefügten zeichnerischen Darstellung sowie der nachfolgenden Beschreibung mehrerer besonders bevorzugter Ausführungsformen der Dichtung; in der Zeichnung zeigen:
- Fig. 1: eine Draufsicht auf einen Ausschnitt aus einer einlagigen Flachdichtung, in dem sich ein mit erfindungsgemäßen Schraubenhaltemitteln versehenes Schraubenloch befindet;
- Fig. 2: einen Schnitt nach der Linie 2-2 in Fig. 1;
- Fig. 3: eine der Fig. 2 entsprechende Schnittdarstellung einer Variante der in Fig. 2 dargestellten Ausführungsform;
- Fig. 4: eine der Fig. 1 entsprechende Darstellung einer dritten Ausführungsform;
- Fig. 5: einen Schnitt nach der Linie 5-5 in Fig. 4;
- Fig. 6: eine der Fig. 1 entsprechende Darstellung einer vierten Ausführungsform;
- Fig. 7: einen Schnitt nach der Linie 7-7 in Fig. 6;
- Fig. 8: eine der Fig. 7 entsprechende Schnittdarstellung einer fünften Ausführungsform;
- Fig. 9: eine der Fig. 1 entsprechende Darstellung einer sechsten Ausführungsform;
- Figuren 10 - 12: Schnitte durch die sechste, eine siebte und eine achte Ausführungsform gemäß der Linie 10-10 in Fig. 9;
- Fig. 13: eine der Fig. 1 entsprechende Darstellung einer neunten Ausführungsform und
- Fig. 14: einen Schnitt nach der Linie 14-14 in Fig. 13.

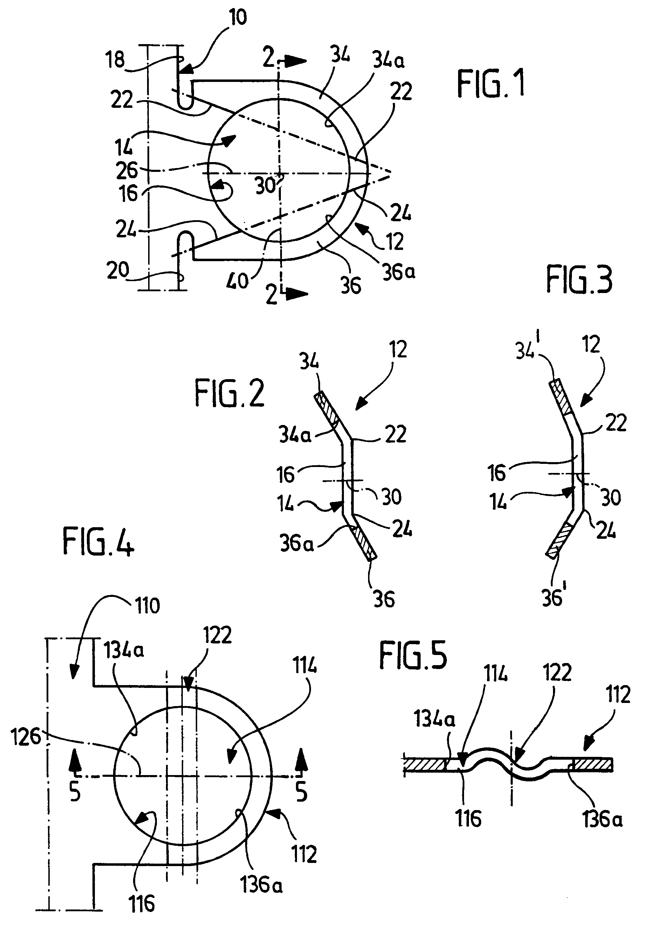

Die Fig. 1 zeigt einen Teil einer Blechlage 10, welche die Dichtungsplatte einer Flachdichtung bilden soll; in einem von der Blechlage 10 gebildeten Dichtungsplattenvorsprung 12 befindet sich ein Schraubenloch 14, dessen Lochrand 16 dann, wenn der gesamte Dichtungsplattenvorsprung 12 in der Ebene der Blechlage 10 (Zeichnungsebene der Fig. 1) liegt, so wie dies in Fig. 1 der Fall sein soll, die Gestalt eines Kreises hat, dessen Durchmesser gleich groß oder ganz geringfügig größer ist wie der Außendurchmesser des Gewindes der in das Schraubenloch 14 einzubringenden, nicht dargestellten Schraube. Wie die Fig. 1 erkennen läßt, ragt der Dichtungsplattenvorsprung 12 über ihm benachbarte Außenkonturbereiche 18 und 20 der von der Blechlage 10 gebildeten Dichtungsplatte hinaus.

In die Fig. 1 sind zwei geradlinige Abkantungslinien 22 und 24 eingezeichnet, welche spiegelbildlich zu einer Mittelachse 26 des Dichtungsplattenvorsprungs 12 verlaufen - die Mittelachse 26 verläuft durch das Zentrum 30 des zunächst kreisrunden Schraubenlochs 14. Erfindungsgemäß ist nun die zumindest im Bereich ihres Vorsprungs 12 zunächst ebene Blechlage 10 längs der Abkantungslinien 22 und 24 aus der Ebene der Blechlage 10 (Zeichnungsebene der Fig. 1) heraus abgebogen, so daß sich zwei aus der Blechlagenebene herausgebogene Blechlagenbereiche 34 und 36 ergeben. Ein solches Abbiegen ist infolge des Verlaufs der Abkantungslinien 22 und 24 sowie der Außenkontur des Dichtungsplattenvorsprungs 12 ohne weiteres möglich. Wie die Figuren 2 und 3 zeigen, können die beiden aus der Ebene der Blechlage herausgebogenen Blechlagenbereiche entweder in entgegengesetzte Richtungen oder in derselben Richtung aus der Blechlagenebene herausgebogen sein; in jedem Fall führt das Herausbiegen der beiden Blechlagenbereiche, in der Draufsicht auf die Blechlage 10 gesehen, zu einer Verkürzung des Durchmessers des Schraubenlochs 14 in Richtung der in die Fig. 1 eingezeichneten Diagonale 40 des Schraubenlochs, wobei der Abkantungswinkel nur so groß gewählt werden darf, daß die von den beiden Blechlagenbereichen 34 und 36 gebildeten Lochrandabschnitte 34a bzw. 36a zwar in das Schraubengewinde eingreifen, vorzugsweise jedoch nicht gegen den Kern des Schraubengewindes anliegen.

Die Ausführungsform gemäß den Figuren 1 und 2 kann so gestaltet werden, daß sich die Schraube in das Schraubenloch 14 einstecken läßt (ohne Drehung), wenn dabei die Achse des Gewindeschafts der Schraube schräg zu der in die Fig. 2 eingezeichneten Lochachse verläuft. Dies ist bei der Ausführungsform nach den Figuren 1 und 3 nur möglich, wenn beim Einstecken des Schraubenschafts die Blechlagenbereiche 34 und 36 hinreichend federnd ausweichen können; andererseits hat diese Ausführungsform den Vorteil, daß die das Schraubenloch 14 durchgreifende Schraube ungefähr senkrecht zur Ebene der Blechlage 10 gehalten wird.

Bei beiden Ausführungsformen wird beim Anziehen der Dichtung, d. h. beim Anziehen der ihrer Montage dienenden Schrauben, der Dichtungsplattenvorsprung 12 zwischen den gegeneinander abzudichtenden Bauteilen flachgepreßt, wobei der Lochrand 16 des Schraubenlochs 14 das Schraubengewinde wieder freigibt.

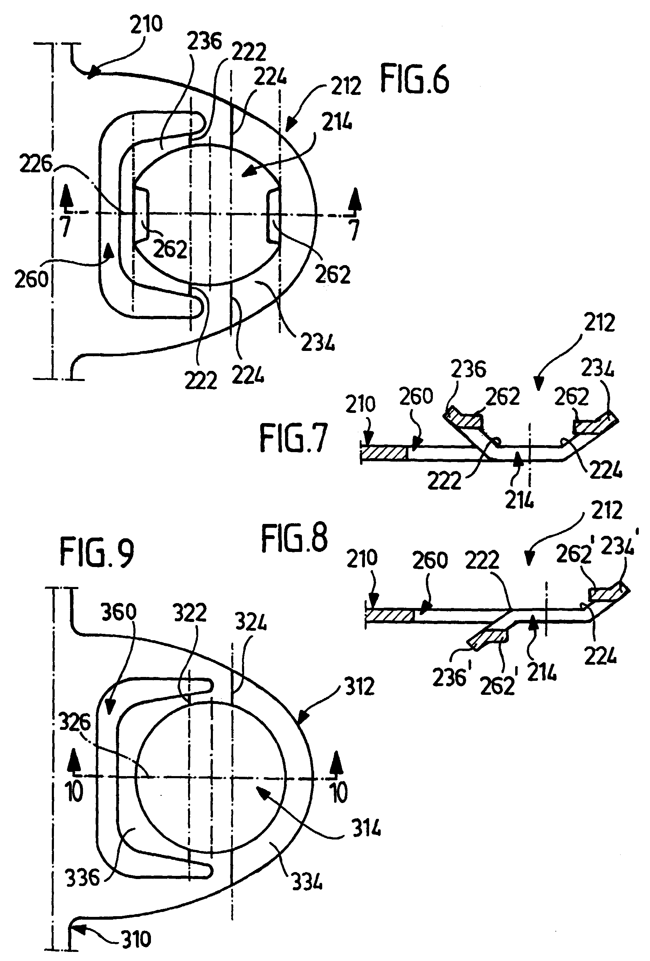

Die übrigen Ausführungsformen gemäß den Figuren 4 bis 14 werden im folgenden nur noch insoweit beschrieben werden, als dies für deren Verständnis erforderlich ist; dabei werden soweit möglich dieselben Bezugszeichen wie in Fig. 1 verwendet werden, jedoch unter Voranstellen der Ziffer 1 bzw. 2 bzw. 3 etc.

Bei der Ausführungsform nach den Figuren 4 und 5 wird eine Verkürzung des zunächst kreisrunden Schraubenlochs 114 dadurch erreicht, daß man den Dichtungsplattenvorsprung 112 mit einer in Fig. 4 strichpunktiert angedeuteten Prägung 122 versieht, welche sich quer zur Mittelachse 126 des Dichtungsplattenvorsprungs über dessen ganze Breite erstreckt und, wie in Fig. 5 dargestellt, einen ungefähr sinusförmigen Querschnitt aufweist. Damit verkürzt sich in der Draufsicht auf die Blechlage 110 der mit der Mittelachse 126 des Schraubenlochs zusammenfallende Lochdurchmesser so weit, daß die einander diagonal gegenüberliegenden Lochrandabschnitte 134a und 136a in das Schraubengewinde eingreifen. Andererseits gibt der als Ganzes mit 116 bezeichnete Lochrand die Schraube wieder frei, wenn der Dichtungsplattenvorsprung 112 flachgedrückt wird.

Bei der in Fig. 6 dargestellten Blechlage 210 ist der Dichtungsplattenvorsprung 212 nicht nur mit einem Schraubenloch 214 versehen, sondern erfindungsgemäß auch noch mit einem ausgestanzten Fenster 260, welches zwischen dem Schraubenloch 214 und der Wurzel des Dichtungsplattenvorsprungs 212 angeordnet ist und ungefähr die eine Hälfte des Schraubenlochs bogenförmig umgibt, so daß zwei aus der Ebene der Blechlage 210 herausbiegbare, bogenförmige Blechlagenbereiche 234 und 236 mit zur Mittelachse 226 des Plattenvorsprungs 212 insbesondere spiegelsymmetrischer Gestalt entstehen. Längs zweier quer zur Mittelachse 226 verlaufender Abkantungslinien 222 und 224 wird nun die Blechlage 210 abgebogen, dabei werden die Blechlagenbereiche 234 und 236 aus der Ebene der Blechlage 210 herausgebogen, und zwar entweder auf dieselbe Seite (siehe Fig. 7) oder auf einander entgegengesetzte Seiten (siehe Fig. 8) der Blechlage 210 - in Fig. 8 wurden die herausgebogenen Blechlagenbereiche mit 234' und 236' bezeichnet. An jeden dieser Blechlagenbereiche ist ein Haltevorsprung 262 bzw. 262' angestanzt, der bei aus der Blechlagenebene herausgebogenen Blechlagenbereichen 234, 236 bzw. 234', 236' in das Schraubengewinde eingreifen soll; dabei wurden die Lagen der Haltevorsprünge bzw. die Winkel, um die die Blechlagenbereiche aus der Ebene der Blechlage 210 herausgebogen wurden, so gewählt, daß für den Eingriff der Haltevorsprünge in das Schraubengewinde der Steigung des Gewindegangs bzw. der Gewindegänge Rechnung getragen wird (in Fig. 7 liegen deshalb die beiden Haltevorsprünge 262 nicht auf demselben Niveau).

Die Figuren 9 bis 11 zeigen den Figuren 6 bis 8 recht ähnliche Ausführungsformen, jedoch ohne die Haltevorsprünge der Ausführungsform nach den Figuren 6 bis 8, so daß auf eine Beschreibung der Figuren 9 bis 11 verzichtet werden kann, nachdem in diese dieselben Bezugszeichen wie in den Figuren 6 bis 8 eingezeichnet wurden, jedoch mit der Zahl 3 (statt der Zahl 2) als erster Ziffer.

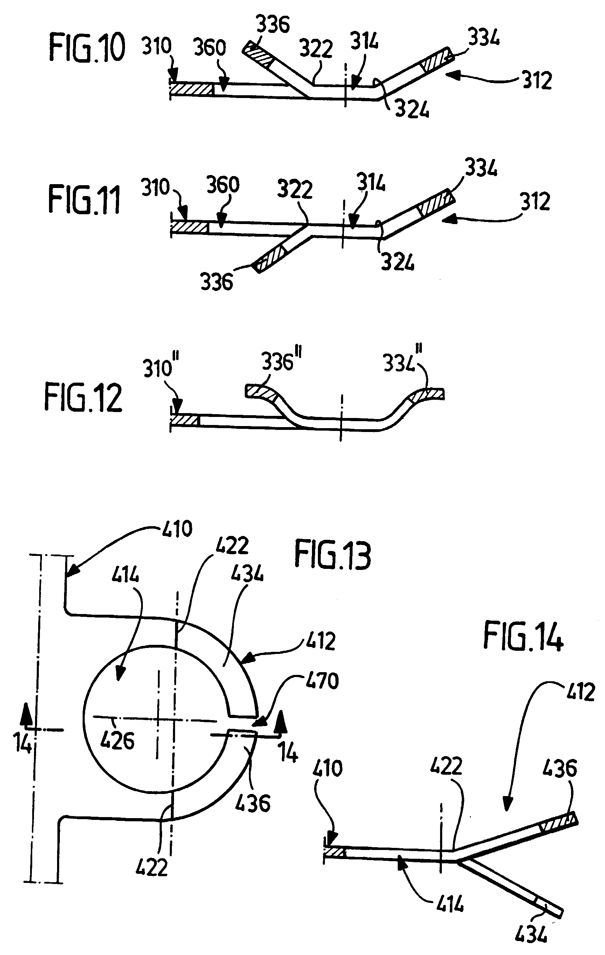

Die Fig. 12 zeigt schließlich noch eine Abwandlung der Ausführungsform nach den Figuren 9 und 10, weshalb in Fig. 12 dieselben Bezugszeichen wie in den Figuren 9 und 10 verwendet wurden, jedoch unter Hinzufügung zweier Striche. Die Ausführungsform nach Fig. 12 unterscheidet sich von derjenigen nach den Figuren 9 und 10 nur dadurch, daß die aus der Ebene der Blechlage 310'' herausgebogenen Blechlagenbereiche 334'' und 336'' in sich noch einmal abgebogen wurden, damit ihre bezüglich des Zentrums des Schraubenlochs radial äußeren Randbereiche ungefähr parallel zur Ebene der Blechlage 310'' verlaufen.

Bei der letzten, in den Figuren 13 und 14 dargestellten Ausführungsform ist der von der Blechlage 410 gebildete Dichtungsplattenvorsprung 412 durch einen Schlitz 470 geteilt, dessen Längsmittelachse mit der Mittelachse 426 des Dichtungsplattenvorsprungs 412 zusammenfällt. Dadurch entstehen zwei aus der Ebene der Blechlage 410 herausbiegbare Blechlagenbereiche 434 und 436, welche die Gestalt bogenförmiger Zungen haben und durch Biegen des Blechs längs einer quer zur Mittelachse 426 verlaufenden Abkantungslinie 422 aus der Ebene der Blechlage 410 herausgebogen werden können, und zwar entweder auf dieselbe Seite (nicht dargestellt), oder auf einander entgegengesetzte Seiten der Blechlage 410, so wie dies in Fig. 14 dargestellt ist. Auch hierdurch verkürzt sich wieder der mit der Mittelachse 426 zusammenfallende Durchmesser des Schraubenlochs 414 (in der Draufsicht auf die Blechlage 410 gesehen).

Aufgrund der vorstehenden Beschreibung der Gestaltung und Funktion der erfindungsgemäßen Dichtung wird verständlich, daß sich die zeichnerisch dargestellten Ausführungsformen in folgender Weise modifizieren lassen, ohne dadurch vom Grundprinzip der Erfindung abzugehen:

Bei einer Ausführungsform ähnlich derjenigen gemäß den Figuren 13 und 14 könnten die beiden zungenförmigen Blechlagenbereiche 434 und 436 auch von zwei aufeinandergeschichteten Blechlagen gebildet werden, deren eine den Blechlagenbereich 434 und deren andere den Blechlagenbereich 436 bildet und jeweils nur einen einzigen derartigen zungenförmigen Blechlagenbereich besitzt. Entsprechendes gilt für die aus der Dichtungsplattenebene herausgebogenen Blechlagenbereiche der anderen, zeichnerisch dargestellten Ausführungsformen.

Ferner wird aufgrund der vorstehenden Erläuterungen verständlich, daß die erfindungsgemäße Dichtung einen Nachteil nicht aufweist, welcher bei der eingangs beschriebenen bekannten Dichtung nach dem DE-U-298 09 130.5 auftreten kann: Werden bei der Montage dieser bekannten Dichtung die Montageschrauben, wie üblich, mit einem vorgegebenen Drehmoment angezogen, bedeutet die Erreichung des Drehmomentgrenzwertes noch nicht, daß die mittels der Dichtung gegeneinander abzudichtenden Bauteile mit der gewünschten Flächenpressung gegen die Dichtung anliegen, da ein Anstieg des Anzugsdrehmoments auf Verwerfungen der in das Schraubengewinde eingreifenden Haltezungen der bekannten Dichtung beruhen kann.

## Patentansprüche

1. Flachdichtung mit einer Dichtungsplatte, welche mindestens eine Blechlage aufweist, die mit wenigstens einem Schraubenloch für den Durchtritt des Gewindeschafts einer Schraube sowie im Randbereich des Schraubenlochs mit von der Blechlage gebildeten, aus der Ebene der Blechlage herausgebogenen Schraubenhaltemitteln versehen ist, **gekennzeichnet durch** die Kombination der folgenden Merkmale:
(a) mindestens ein einen Abschnitt des Schraubenlochrands bildender Blechlagenbereich ist derart aus der Ebene der Blechlage herausgebogen, daß - senkrecht zur Ebene der Blechlage gesehen - mindestens ein Lochrandabschnitt von einem diesem gegenüberliegenden Lochrandabschnitt einen Abstand aufweist, welcher kleiner als der Außendurchmesser des Schraubenschafts, jedoch mindestens gleich dem Kerndurchmesser des Schraubengewindes ist;
(b) der Schraubenlochrand ist so gestaltet, daß er bei im Bereich des Schraubenlochs flachgepreßter Blechlage den das Schraubenloch durchgreifenden Gewindeschaft freigibt.

2. Flachdichtung nach Anspruch 1, dadurch gekennzeichnet, daß mindestens zwei Blechlagenbereiche, deren jeder einen Lochrandabschnitt bildet, aus der Ebene der Blechlage herausgebogen sind.

3. Flachdichtung nach Anspruch 2, dadurch gekennzeichnet, daß die herausgebogenen Blechlagenbereiche einander benachbart angeordnet sind.

4. Flachdichtung nach Anspruch 2, dadurch gekennzeichnet, daß die herausgebogenen Blechlagenbereiche einander ungefähr gegenüberliegende Abschnitte des Schraubenlochrands bilden.

5. Flachdichtung nach einem der Ansprüche 2 bis 4, dadurch gekennzeichnet, daß ein erster Blechlagenbereich in einer Richtung und ein zweiter Blechlagenbereich in der entgegengesetzten Richtung aus der Ebene der Blechlage herausgebogen ist.

6. Flachdichtung nach einem der Ansprüche 2 bis 4, dadurch gekennzeichnet, daß die Blechlagenbereiche in derselben Richtung aus der Ebene der Blechlage herausgebogen sind.

7. Flachdichtung nach einem der vorstehenden Ansprüche, dadurch gekennzeichnet, daß sich das mit Schraubenhaltemitteln versehene Schraubenloch in einem Dichtungsplattenvorsprung befindet, welcher über ihm benachbarte Außenkonturbereiche der Dichtungsplatte vorsteht.

8. Flachdichtung nach Anspruch 7, dadurch gekennzeichnet, daß der Vorsprung durch einen sich vom äußeren Rand der Blechlage bis zum Schraubenloch erstreckenden Schlitz in zwei jeweils einen aus der Ebene der Blechlage herausgebogenen Blechlagenbereich bildende Blechzungen aufgeteilt ist.

9. Flachdichtung nach einem der vorstehenden Ansprüche, dadurch gekennzeichnet, daß der aus der Ebene der Blechlage herausgebogene Blechlagenbereich einen für einen Eingriff in das Schraubengewinde vorgesehenen Lochrandabschnitt bildet, welcher ungefähr parallel zur Ebene der Dichtungsplatte verläuft.

10. Flachdichtung nach Anspruch 7, dadurch gekennzeichnet, daß die Blechlage mit einer in der Draufsicht auf letztere ungefähr geradlinigen Prägung versehen ist, welche sich zu beiden Seiten des Schraubenlochs ungefähr quer zu derjenigen Richtung erstreckt, in der der Dichtungsplattenvorsprung über die benachbarten Außenkonturbereiche der Dichtungsplatte vorsteht.

11. Flachdichtung nach den Ansprüchen 7 und 10, dadurch gekennzeichnet, daß sich die Prägung quer über den ganzen Dichtungsplattenvorsprung erstreckt.

12. Flachdichtung nach Anspruch 10 oder 11, dadurch gekennzeichnet, daß die Prägung einen ungefähr U- oder wellenförmigen Querschnitt aufweist.
